(19) Europäisches Patentamt
European Patent Office
Office européen des brevets

(11) **EP 2 761 037 B1**

(12) **EUROPÄISCHE PATENTSCHRIFT**

(45) Veröffentlichungstag und Bekanntmachung des Hinweises auf die Patenterteilung:
**23.03.2016 Patentblatt 2016/12**

(21) Anmeldenummer: **12753969.0**

(22) Anmeldetag: **30.08.2012**

(51) Int Cl.:
*C21C 5/38* (2006.01)      *C21C 5/46* (2006.01)
*F27B 3/28* (2006.01)      *F27D 19/00* (2006.01)
*F27D 21/00* (2006.01)

(86) Internationale Anmeldenummer:
**PCT/EP2012/066840**

(87) Internationale Veröffentlichungsnummer:
**WO 2013/045198 (04.04.2013 Gazette 2013/14)**

(54) **VERFAHREN UND VORRICHTUNG ZUR BEEINFLUSSUNG DES ENTSTEHENS VON REAKTIONSGASEN IN EINEM METALLURGISCHEN GEFÄSS**

METHOD AND DEVICE FOR INFLUENCING THE GENESIS OF REACTION GASES IN A METALLURGIC VESSEL

PROCÉDÉ ET DISPOSITIF SERVANT À INFLUENCER L'APPARITION DE GAZ DE RÉACTION DANS UN RÉCIPIENT MÉTALLURGIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.09.2011 AT 14042011**

(43) Veröffentlichungstag der Anmeldung:
**06.08.2014 Patentblatt 2014/32**

(73) Patentinhaber: **Primetals Technologies Austria GmbH**
**4031 Linz (AT)**

(72) Erfinder: **HAMPEL, Alfred**
**A-4040 Linz (AT)**

(74) Vertreter: **Metals@Linz**
**c/o Siemens AG**
**Postfach 22 16 34**
**80560 München (DE)**

(56) Entgegenhaltungen:
**DE-A1- 2 657 540      JP-A- 2005 232 540**
**US-A- 4 273 312**

• ELS C J L ET AL: "New Techniques in Steel Meltshop Air Pollution Control", IRON & STEEL TECHNOLOGY, AIST, WARRENDALE, PA, US, Bd. 6, Nr. 2, Februar 2009 (2009-02), Seiten 65-76, XP001557359, ISSN: 1547-0423
• PLIKAS T ET AL: "Application of CFD Modeling to the Design of Fume Control Systems in the Steel Industry", IRON & STEEL TECHNOLOGY, AIST, WARRENDALE, PA, US, Bd. 4, Nr. 11, November 2007 (2007-11), Seiten 33-43, XP001556918, ISSN: 1547-0423

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Gebiet der Technik

Die Erfindung betrifft ein Verfahren zur Beeinflussung des Entstehens von Reaktionsgasen in einem metallurgischen Gefäß zur Erzeugung von schmelzflüssigen Metallen während Schrotteinsatz, wobei die Reaktionsgase in einer Chargierabsaughaube gesammelt und in einer Absaugleitung einer Entstaubungsanlage zugeführt werden, sowie eine Vorrichtung hierzu.

Stand der Technik

Bei der Erzeugung von flüssigen Metallen und Metalllegierungen, insbesondere bei der Herstellung von flüssigem Stahl, wird zu Zwecken des Schrottrecyclings und zur Kühlung der Metallschmelze Schrott in den Konverter oder in den Elektrolichtbogenofen eingesetzt.

Die den Stahlwerken zur Verfügung stehenden Schrottsorten enthalten in steigendem Ausmaß anhaftende Anteile an brennbaren Substanzen wie Kunststoffe, Fette, Öle, Farben, die hauptsächlich aus Kohlenwasserstoffen bestehen, aber auch brennbare metallische Beschichtungen wie Zink, Zinn, Kadmium (galvanische Beschichtung) und ähnlichen Stoffen, die insgesamt als Schrottbegleitstoffe bezeichnet werden.

Kommen Roheisen und Schrott im Zuge des Chargiervorganges in Kontakt, erfolgt ein intensiver Wärmeeintrag in den Schrott, und dieser wird samt den Schrottbegleitstoffen aufgeheizt, wobei die Kohlenwasserstoffe durch thermische Zerlegung Gas abgeben und die galvanischen Beschichtungen verdampfen.

Diese Gase und Dämpfe- im Rahmen der vorliegenden Anmeldung auch Reaktionsgase genannt - werden aus dem Konverter hinausgeschoben und verbrennen nach Maßgabe des vorhandenen Sauerstoffes in der umgebenden Atmosphäre teilweise oder vollständig DE2657540 A offenbart ein Verfahren zur Steuerung von Abgasen in einem Sauerstoffblaskonverter, wobei die Menge der im Ofen erzeugten Gase vorausberechnet und die Menge der abgesaugten Abgase verändert wird. Ein Abgasdämpfer wird gesteuert, indem ein Abgasdämpfervoraussagesteuersignal verarbeitet wird, das durch Nachweis der Menge des zugeführten Sauerstoffes, der Menge an eingebrachten Sekundärrohstoffen, der Zusammensetzung der Abgase und der Durchflussrate der Abgase erhalten wird, um die Menge der im Ofen erzeugten Gase und die Menge der Verbrennunsabgase an der Mündung zu berechnen.

"New Techniques in Steel Meltshop Air Pollution Control", C.J.L. Eis e.a., Iron & Steel Technology, Feb.2009, S.65-76, offenbart eine Vorrichtung zur Beeinflussung des Entstehens von Reaktionsgasen, umfassend ein metallurgisches Gefäß und eine Sekundärabsauganlage mit mindestens einer Chargierabsaughaube und einer Absaugleitung, wobei ein Durchflussmengendetektor zur Messung des (momentanen) Reaktionsgasdurchflusses in der Absaugleitung, und eine Temperaturmesseinrichtung zum Messen der Temperatur der Reaktionsgases, mit einer Regeleinrichtung verbunden sind, wobei die Regeleinrichtung einen Rechner zur Ermittlung eines Wertes der momentanen Wärmeleistung von im metallurgischen Gefäß erzeugten und über die Chargierabsaughaube und Absaugleitung abgesaugten Reaktionsgasen umfasst.

In Stahlwerken ohne Chargierabsaughauben - Teil einer sogenannten Chargierabsaugung beziehungsweise Sekundärabsauganlage - kommt es immer zur vollständigen Verbrennung, da durch die Verbrennung starke Turbulenzen entstehen und diese für ständige Sauerstoffzufuhr an die brennbaren Gase und Dämpfe sorgen, auch unabhängig von der Chargierreihenfolge.

Im Falle des Chargierens von Schrott auf Roheisen kommt es zur schlagartigen Reaktion und zu einem verpuffungsähnlichen Ausstoß der Gase und Dämpfe aus dem Konverter, sodass diese schwer erfassbar werden. In Stahlwerken mit Chargierabsaugung wird daher üblicherweise erst Schrott und anschließend Roheisen chargiert, um über die Chargiergeschwindigkeit des Roheisens die zur Bildung der Gase und Dämpfe führenden Reaktionen, damit den Reaktionsgasausstoß steuern zu können und somit eine weitgehende Erfassung der Schwaden der Reaktionsgase sicherzustellen.

Da zu Beginn des Chargiervorganges der Anteil an Gase und Dämpfe bildenden Substanzen im Schrott nicht bekannt sind, und die Chargiergeschwindigkeit des Roheisens vorwiegend aufgrund optisch sichtbarer Reaktionsgasentwicklung gesteuert wird, kommt es laufend zu Überlastungen der Absaugfähigkeit der Sekundärabsauganlage. Nicht abgesaugte Gase und Dämpfe verbrennen um die Chargierabsaughaube herum und zehren dabei den Luftsauerstoff teilweise oder ganz auf. Dadurch steht für die in die Chargierabsaughaube abgesaugten Gase und Dämpfe nur ungenügend Sauerstoff zur Verfügung, und es kommt durch unvollständige Verbrennung zu einem erhöhten Gehalt an unverbrannten Gasen und Dämpfen, der die untere Explosionsgrenze überschreiten kann. Dadurch können sich die Gasleitungssysteme und die Misch- und Filteraggregate der Sekundärabsauganlage mit diesen noch zündfähigen Gemischen füllen. Sekundärabsauganlagen enthalten üblicherweise Filteraggregate zur Reinigung der abgesaugten Gase und Dämpfe; genannt Sekundärentstaubung. Da es bei den Sekundärabsauganlagen vor dem Filteraggregat meistens noch Kühllufteinlässe gibt, die durch Luftzufuhr das Filterschlauchmaterial vor Überhitzung durch die heißen Gase und Dämpfe schützen soll, kann wiederum Sauerstoff zu den zündfähigen Gemischen gelangen. Funkenflug, der bei Stahlerzeugungsprozessen sehr wahrscheinlich ist, kann dieses Gasgemisch zünden und zu Explosionen in den betreffenden Bauteilen der Sekundärabsauganlage führen. Bei einigen Stahlwerken hat es bereits Zerstörungen von Aggregaten in Absaug- und Filtersystemen durch Explosionen gegeben.

Um diesem Problem Abhilfe zu schaffen wurden bei einigen Anlagen folgende Maßnahmen gesetzt:

- Messungen der Filtereintrittstemperatur und Steuerung einer optischen Signalisierungsanlage für den Bedienungsmann des Roheisenchargierkranes (Ampel rot/grün).
- Einsatz von Analysatoren in der Absaugstrecke, die die Konzentration an unverbrannten Gasen (vornehmlich CO, $H_2$ und $CH_4$) oder die Konzentration des Restsauerstoffes bestimmen - eine vollständige Aufzehrung des Sauerstoffes der mitgesaugten Luft ist ein Indiz für das Vorhandensein von unverbrannten Gasen, die bei späterem Sauerstoffzutritt zu Explosionen führen können.

Diese Methodik ist allerdings aus folgenden Gründen keine verlässliche Maßnahme zur Verhinderung von Explosionen:

Die Temperatur im Absaugsystem bei überlasteten Sekundärabsauganlagen muss nicht in unmittelbarem Zusammenhang mit einem Gehalt an unverbranntem Gas stehen. Niedrigere Gastemperaturen können auch auf geringe Gasemission aus dem Konverter zurückzuführen sein, aber auch bereits auf unverbrannte Gase, die keine Verbrennungsenergie infolge Luftmangels entwickeln können.

Die in der Absaugleitung angeordneten Analysatoren haben eine Totzeit und das Vorhandensein von unverbrannten Gasen wird daher zu spät signalisiert, um Gegenmaßnahmen - nämlich das Abbrechen der Roheisenchargierung - einzuleiten.

Zusammenfassung der Erfindung

Technische Aufgabe

Aufgabe der vorliegenden Erfindung ist es daher, die Nachteile dieses aus der Betriebspraxis bekannten Standes der Technik zu vermeiden und ein Verfahren und eine Vorrichtung vorzuschlagen, die es ermöglichen, das Chargieren von Einsatzstoffen, die einem intensiven Verbrennungsprozess bei Entwicklung großer Reaktionsgasmengen unterliegen, so zu führen, dass bei nachgeordneten Aggregaten, insbesondere in den Aggregaten der Sekundärentstaubung, die Einsatzgrenzen dieser Aggregate nicht überschritten werden.

Diese Aufgabe wird erfindungsgemäß gelöst durch ein

Verfahren zur Beeinflussung des Entstehens von Reaktionsgasen in einem metallurgischen Gefäß zur Erzeugung von schmelzflüssigen Metallen aus Einsatzstoffen umfassend Schrott und Roheisen, wobei die Reaktionsgase in einer Chargierabsaughaube gesammelt und in einer Absaugleitung einer Entstaubungsanlage zugeführt werden.
Dieses Verfahren ist dadurch gekennzeichnet, dass

- die momentane Reaktionsgastemperatur in der Chargierabsaughaube gemessen wird,
- der momentane Reaktionsgasdurchfluss in der Absaugleitung gemessen wird,
- die Temperatur der Reaktionsgases am Ort der Messung des momentanen Reaktionsgasdurchflusses zum Zeitpunkt der Messung des momentanen Reaktionsgasdurchflusses gemessen wird,
- aus diesen Messwerten die momentane Wärmeleistung der Reaktionsgase errechnet wird, und
- der Wert dieser momentanen Wärmeleistung der Reaktionsgase zur Regelung der Einsatzstoffmenge beim Chargieren von Einsatzstoffen in das metallurgische Gefäß herangezogen wird.

Unter dem Begriff momentane Reaktionsgastemperatur ist die Temperatur der Reaktionsgase zum Zeitpunkt der Messung zu verstehen. Die Temperatur wird beispielsweise in °C oder K angegeben.
Unter dem Begriff momentaner Reaktionsgasdurchfluss ist der Durchfluss von Reaktionsgas zum Zeitpunkt der Messung dieses Durchflusses zu verstehen. Der Durchfluss wird beispielsweise in $m^3/s$ angegeben.
Unter dem Begriff momentane Wärmeleistung ist die Wärmeleistung zum Zeitpunkt der Messung von momentaner Reaktionsgastemperatur und momentanem Reaktionsgasdurchfluss zu verstehen. Momentane Reaktionsgastemperatur und momentaner Reaktionsgasdurchfluss werden zum selben Zeitpunkt gemessen.

Vorteilhafte Wirkungen der Erfindung

Das metallurgische Gefäß ist beispielsweise ein Konverter.

Die Dichte beispielsweise in kg/m$^3$ der Reaktionsgase ist von ihrer Temperatur abhängig.

Aus der Temperatur der Reaktionsgase am Ort der Messung des momentanen Reaktionsgasdurchflusses zum Zeitpunkt der Messung des momentanen Reaktionsgasdurchflusses beispielsweise in °C oder K, und aus dem momentanen Reaktionsgasdurchfluss in [m$^3$/s] ergibt sich über die Dichte bei der Temperatur der Reaktionsgase am Ort der Messung des momentanen Reaktionsgasdurchflusses zum Zeitpunkt der Messung des momentanen Reaktionsgasdurchflusses ein momentaner Reaktionsgasdurchfluss in [kg/s]. Über die spezifische Wärmekapazität kann unter Berücksichtigung der momentanen Reaktionsgastemperatur in der Chargierabsaughaube und der Umgebungstemperatur die momentane Wärmeleistung - auch thermische Leistung genannt - der Reaktionsgase über die Beziehung

Thermische Leistung P in [kW] =

momentaner Reaktionsgasdurchfluss MR in [kg/s]

mal

spezifische Wärmekapazität $c_p$ der Reaktionsgase in [kJ/(kg * K)]

mal

der Temperaturdifferenz zwischen

der momentanen Reaktionsgastemperatur in der Chargierabsaughaube $T_H$ in K und

der Umgebungstemperatur $T_U$ in K

berechnet werden.

In einer Formel wiedergegeben lautet obiger Zusammenhang wie folgt:

$$P[kW] = MR[kg/s] \cdot c_p[kJ/kg \cdot K] \cdot (T_H - T_U)[K]$$

mit

P...thermische Leistung

MR....Momentaner Reaktionsgasdurchfluss

cp...spezifische Wärmekapazität

$T_H$... momentanen Reaktionsgastemperatur in der Chargierabsaughaube

$T_U$... Umgebungstemperatur

Die spezifische Wärmekapazität ist abhängig vom Bereich der Temperatur, in dem sich die Verbrennungsgase bewegen - in der Regel zwischen der Reaktionsgastemperatur in der Chargierabsaughaube als höchste Temperatur und der Umgebungstemperatur als tiefste Temperatur. Die spezifische Wärmekapazität wird üblicherweise als Funktion in die Steuerung oder Regelung eingespeichert.

Die Umgebungstemperatur ist die Temperatur in der Umgebung der erfindungsgemäßen Vorrichtung.

Bei Umrechnung des momentanen Reaktionsgasdurchflusses in [m$^3$/s] in Normkubikmeter/s [Nm$^3$/s] lässt sich die momentane Wärmeleistung der Reaktionsgase analog zur obigen Darstellung errechnen.

Folgende Faktoren sollten vorteilhafterweise zur Durchführung des Verfahrens gegeben sein:

Faktor 1: Kenntnis des strömungstechnischen Verhaltens des Systems der Sekundärabsauganlage. Dieses ist durch die Auslegungsdaten der Sekundärabsauganlage wesentlich mitbestimmt.

Der Wärmeleistungsabzug - also wieviel von den Reaktionsgasen gelieferte Wärmeleistung mit der Sekundärabsauganlage der Entstaubungsanlage pro Zeiteinheit abgeführt wird - ist eine Funktion der momentanen Reaktionsgastemperatur in der Chargierabsaughaube und der Absaugleistung der Entstaubungsanlage, Diese wird wiederum bestimmt von der Absaugkapazität der Gebläse - das heißt, wieviel Gasvolumen pro Zeiteinheit abgesaugt werden kann - und den Kühlleistungen in den einzelnen Aggregaten wie Gaskanälen, Filter und Kühler.

Aus den Auslegungsdaten einen Sekundärabsauganlage lässt sich ihre Kapazität hinsichtlich maximaler Wärmeabfuhr pro Zeiteinheit errechnen, Rechenwert in [MW]. Jede Sekundärabsauganlage hat einen maximalen Wärmeleistungsabzug, der durch die Bauform und die maximal zulässigen Temperaturen der verwendeten Materialien begrenzt ist: Maximaler Wärmeleistungsabzug des Systems der Sekundärabsauganlage wird im Rahmen dieser Anmeldung auch abgekürzt mit MWLS (= Maximaler Wärme Leistungsabzug des Sekundärabsaugsystems), gerechnet in [MW].

Faktor 2: Einsatz von schnell ansprechenden Temperaturmessungen an der Chargierabsaughaube und an der Durchflussmessstelle. Unter einer schnell ansprechenden Temperaturmessung ist eine Temperaturmessung zu verstehen, bei der ein Messwert vorzugsweise innerhalb von 5 Sekunden, bevorzugterweise schneller, zur Verfügung steht. Ein Thermoelement für eine solche Temperaturmessung hat bevorzugt maximal 3 mm Durchmesser und ragt bevorzugt ohne Schutzrohr in den Gasstrom. Der Vorteil dieser Messung liegt in der Unmittelbarkeit des Messergebnisses, was sich durch einen nur geringen Messfehler gegenüber dem wahren Temperaturwert infolge der kurzen Ansprechzeit des Thermoelementes ausdrückt. Wenn das Messergebnis schnell vorliegt, kann auch ein auf Basis des Messergebnisses in einem späteren Schritt erhaltenes Rechenergebnis schnell vorliegen.

Faktor 3: Einsetzen einer Durchflussmessung in der Absaugleitung nach der Chargierabsaughaube zur Ermittlung des momentanen Reaktionsgasdurchflusses.

Bezüglich der Messung des momentanen Reaktionsgasdurchflussses gilt: die Messung des Durchflusses kann direkt oder/oder indirekt, das heißt unter Messung einer für den Durchfluss charakteristische Kenngröße, die anschließend in einen Durchfluss umgerechnet wird, erfolgen. Beispielsweise durch ein Anemometer oder eine Messung von Ionengeschwindigkeit an mehreren Stellen, oder über ein Pitotrohr. Es kann auch eine normierte Durchflussmessung über einen widerstandsgebenden Bauteil wie beispielsweise Düse oder Drosselscheibe erfolgen.

Das erfindungsgemäße Verfahren umfasst folgenden Verfahrensschritt:

Aus den Messwerten gemäß Faktor 2 und Faktor 3 wird wie voranstehend beschrieben unter Berücksichtigung des spezifischen Wärmeinhaltes der abgesaugten Reaktionsgase die aus dem metallurgischen Gefäß - beispielsweise Konverter - mit den Reaktionsgasen abgesaugte Leistung [MW] - gleich der momentane Wärmeleistung der erzeugten Reaktionsgase - errechnet. Diese ist im Falle von weitgehend vollständiger Erfassung der Reaktionsgase über die Chargierabsaughaube mit der sogenannten tatsächlichen Emissionsleistung des metallurgischen Gefäßes - beispielsweise Konverter -, gemessen in [MW], abgekürzt TELK (= Tatsächliche Emissions-Leistung Konverter) übereinstimmend.

Der Wert der momentanen Wärmeleistung der erzeugten Reaktionsgase wird erfindungsgemäß zur Regelung der Einsatzstoffmenge beim Chargieren von Einsatzstoffen - beispielsweise Roheisen, das auf Schrott chargiert wird - in das metallurgische Gefäß herangezogen.

Durch das erfindungsgemäße Verfahren wird also die aus dem metallurgischen Gefäß - beispielsweise Konverter - momentan austretende Wärmeleistung - diese Wärmeleistung ist die momentane Wärmeleistung der erzeugten Reaktionsgase, beziehungsweise im Falle von weitgehend vollständiger Erfassung der Reaktionsgase über die Chargierabsaughaube auch die tatsächliche Emissionsleistung des Konverters [MW] TELK - über Messung der momentanen Reaktionsgastemperatur in der Chargierabsaughaube, über Messung des momentanen Reaktionsgasdurchfluss in der an die Chargierabsaughaube angeschlossenen Absaugleitung, und über Messung der Temperatur der Reaktionsgases am Ort der Messung des momentanen Reaktionsgasdurchflusses zum Zeitpunkt der Messung des momentanen Reaktionsgasdurchflusses, errechnet.

Bevorzugterweise wird dieser errechnete Wert als Steuergröße in einem Regelkreis - bevorzugterweise einem Leistungsregler - benutzt. Die aus dem metallurgischen Gefäß - beispielsweise Konverter - momentan austretende Wärmeleistung der erzeugten Reaktionsgase wird erfindungsgemäß dadurch beeinflusst, dass die Einsatzstoffmenge beim Chargieren von Einsatzstoffen in das metallurgische Gefäß durch den Regelkreis geregelt wird. Das kann beispielsweise dadurch erfolgen, dass eine dosierte Zugabe von Roheisen in einen Konverter geregelt wird, indem der Leistungsregler Steuerbefehle an ein Hubwerk gibt.

Vorzugsweise wird der Wert der errechneten momentanen Wärmeleistung (TELK) mit zumindest einem vorbestimmten Grenzwert verglichen und es erfolgt in Abhängigkeit vom Erreichen dieses Grenzwertes und/oder einer Überschreitung dieses Grenzwertes die Unterbrechung oder Verminderung des Chargierens von Einsatzstoffen in das metallurgische Gefäß. Bei einer Unterschreitung des Grenzwertes wird das Chargieren von Einsatzstoffen in das metallurgische Gefäß wieder freigegeben, beziehungsweise muss bei Chargierbeginn der Grenzwert überschritten werden. Das Unterbrechen beziehungsweise Freigeben der Chargierung wirkt auf den Hilfshub des Chargierkranes ein, der beispielsweise das Kippen und Aufrichten einer Chargierpfanne bewerkstelligt. Durch das Unterbrechen beziehungsweise Freigeben der Chargierung wird die Einsatzstoffmenge beim Chargieren von Einsatzstoffen in das metallurgische Gefäß geregelt.

Das erfindungsgemäße Verfahren wird bevorzugt automatisch durchgeführt; das bedeutet, dass die Messung der Messwerte, sowie mittels der Messwerte erfolgende Errechnung der momentanen Wärmeleistung der erzeugten Reaktionsgase ebenso automatisch erfolgt wie die Regelung der Einsatzstoffmenge beim Chargieren von Einsatzstoffen in das metallurgische Gefäß basierend auf der errechneten momentanen Wärmeleistung.

Beispielsweise läuft das erfindungsgemäße Verfahren dann folgendermassen ab, wobei beispielhafterweise ein unterhalb des Wertes der MWLS [MW] liegender Wert als Grenzwert herangezogen wird:

- Sofern der errechnete Wert der momentanen Wärmeleistung der erzeugten Reaktionsgasebeziehungsweise im Falle von weitgehend vollständiger Erfassung der Reaktionsgase über die Chargierabsaughaube der Wert der TELK [MW] - geringer ist als der Grenzwert, kann die Chargierung von Einsatzstoffen, beispielsweise von Roheisen, fortgesetzt und/oder gesteigert werden.

- Sofern der errechnete Wert der momentanen Wärmeleistung der erzeugten Reaktionsgase - und somit im Falle von weitgehend vollständiger Erfassung der Reaktionsgase über die Chargierabsaughaube der Wert der TELK [MW] - gleich ist dem Grenzwert, besteht die Gefahr dass es Ausschwallungen an der Chargierabsaughaube gibt und die Reaktionsgase nur mehr teilweise abgesaugt werden, was auch zum Absaugen von unverbrannten Reaktionsgasen führen könnte.

Es wird daher, wenn der errechnete Wert der momentanen Wärmeleistung der erzeugten Reaktionsgase - beziehungsweise der Wert der TELK [MW] - den Grenzwert erreicht oder überschreitet, das Hilfshubwerk des Chargierkranes, das die Chargierpfanne kippt, abgeschaltet - beispielsweise über eine Verriegelung. Es findet also eine Chargierunterbrechung statt. Durch Chargierunterbrechung wird die Emission an Reaktionsgase reduziert beziehungsweise unterbrochen.

Sofern der errechnete Wert der momentanen Wärmeleistung der erzeugten Reaktionsgasebeziehungsweise im Falle von weitgehend vollständiger Erfassung der Reaktionsgase über die Chargierabsaughaube der Wert der TELK [MW] - nach einer Verriegelung des Hilfshubwerkes wieder geringer wird als der Wert der Grenzwert, wird die Verriegelung wieder aufgehoben und das Roheisenchargieren kann fortgesetzt werden.

Es wird also vorzugsweise bei Erreichen und/oder Überschreitung des Grenzwertes das Chargieren von Einsatzstoffen eingestellt und bei einer nachfolgenden Unterschreitung des Grenzwertes das Chargieren von Einsatzstoffen wieder aufgenommen.

Zum Zeitpunkt der Chargierunterbrechung kann infolge des Nachrinnens von Roheisen der Wert der TELK [MW] noch eine Zeit lang während des Nachrinnens weiter steigen. Daher ist beispielsweise für den Grenzwert, der Abschaltung des Hilfshubwerkes bedingt, gegenüber dem Wert des MWLS [MW] vorzugsweise noch ein Sicherheitsabstand vorgesehen, um ein Überlasten der Sekundärabsauganlage, Ausschwallungen an der Chargierabsaughaube und Absaugen von unverbrannten Reaktionsgasen zu vermeiden.

Es wird also beispielsweise nicht erst eine Chargierunterbrechung eingeleitet wird, wenn der TELK gleich dem MWLS ist, sondern schon dann, wenn der TELK einen Grenzwert erreicht und/oder überschreitet, der niedriger ist als der MWLS.

Vorzugsweise wird der Grenzwert aus dem maximalen Wärmeleistungsabzug MWLS der Entstaubungsanlage, aus einem Leistungsgradienten und aus der tatsächlichen Emissionsleistung des metallurgischen Gefäßes bei weitgehend vollständiger Erfassung der Reaktionsgase über die Chargierabsaughaube TELKS errechnet.

Nach einer Ausführungsform kann ein Sicherheitsabstand des Grenzwertes gegenüber dem Wert des MWLS derart vorgesehen werden, dass durch Auswertung der zeitlichen Zunahme oder Abnahme des Wertes der TELK [MW] der "Leistungsgradient" [ΔMW/s] und somit die Reaktivität des Schrottes erkannt werden, und die Chargierung rechtzeitig durch Setzen eines adäquaten Grenzwertes mit Sicherheitsabstand - das heißt eines Grenzwertes, der unter Berücksichtigung der momentanen TELK und unter Berücksichtigung des Leistungsgradienten sicherstellt, dass der Wert des MWLS gar nicht oder nur kurzzeitig überschritten werden wird-unterbrochen wird

Diese Erkennung des Leistungsgradienten in Verbund mit dem Wert der TELK [MW] ermöglicht eine automatische Regelung der tatsächlichen Emissionsleistung des Konverters TELK nahe am Wert des MWLS [MW], ohne dass das Bedienungspersonal eingreifen muss.

Ein solches automatisches Regelsystem unter Berücksichtigung des Leistungsgradienten stellt sicher:

- dass möglichst schnell chargiert werden kann, solange der Wert der TELK kleiner ist als der Grenzwert, beispielsweise kleiner als der Wert der MWLS;
- dass ausreichend langsam chargiert wird, sofern der Wert der TELK sich dem Grenzwert beziehungsweise dem Wert der MWLS nähert. Dabei wird über den Leistungsgradienten die Reaktivität des Schrottes bereits berücksichtigt, wodurch die Chargierung rechtzeitig unterbrochen werden kann, um ein zu erwartendes Überschwingen des Wertes der TELK über den Wert des MWLS infolge Nachrinnens des Roheisens noch abzufangen.
- dass das Bedienungspersonal nicht eingebunden werden muss und dadurch Bedienungsfehler ausgeschlossen werden.
- immer für eine vollständige Verbrennung genügend Umgebungsluft über die Chargierabsaughaube mitgesaugt wird, wodurch die Explosionsgefahr in dem System der Chargierabsaugung beziehungsweise Sekundärabsauganlage vermindert wird.

Vorzugsweise erfolgt die Regelung des Chargierens von Einsatzstoffen in das metallurgische Gefäß über eine 2-Punktregelung. Bei einer 2-Punktregelung sind im Leistungsregelkreis zwei vorbestimmte Grenzwerte vorhanden, die mit einer Messgröße - erfindungsgemäß mit dem Wert der TELK - verglichen werden. Ein Spezialfall einer Zweipunktregelung ergibt sich, wenn die beiden vorbestimmten Grenzwerte gleich groß sind. In diesem Fall kann die Messgröße entweder gleich, kleiner oder größer als der Grenzwert sein. Es gilt dann beispielsweise, dass je nachdem, ob die Messgröße größer oder kleiner als der Grenzwert ist, eine Verminderung oder Beibehaltung oder gegebenenfalls eine Erhöhung der pro Zeiteinheit zugeführten Menge Einsatzstoff beim Chargieren von Einsatzstoffen in das metallurgische Gefäß erfolgt.

Bei dem erfindungsgemäßen Verfahren umfasst das Chargieren von Einsatzstoffen das Einbringen von schmelzflüssigem Metall, wie Roheisen, auf eine Schrottvorlage im metallurgischen Gefäß, oder das Einbringen von Schrott auf eine Vorlage von schmelzflüssigem Metall im metallurgischen Gefäß.

Ein weiterer Gegenstand der vorliegenden Anmeldung ist eine Vorrichtung zur Durchführung des erfindungsgemäßen Verfahrens.

Dabei handelt es sich um eine Vorrichtung zur - vorzugsweise geregelten, zeitlichen - Beeinflussung des Entstehens von Reaktionsgasen,

umfassend ein metallurgisches Gefäß und eine Sekundärabsauganlage mit mindestens einer Chargierabsaughaube und einer Absaugleitung,

dadurch gekennzeichnet, dass

- eine Temperaturmesseinrichtung zum Messen der momentanen Reaktionsgastemperatur in der Chargierabsaughaube.
- ein Durchflussmengendetektor zur Messung des momentanen Reaktionsgasdurchflusses in der Absaugleitung, und
- eine Temperaturmesseinrichtung zum Messen der Temperatur der Reaktionsgases am Ort der Messung des momentanen Reaktionsgasdurchflusses zum Zeitpunkt der Messung des momentanen Reaktionsgasdurchflusses,

mit einer Regeleinrichtung
verbunden sind,

wobei die Regeleinrichtung einen Rechner zur Ermittlung eines Wertes der momentanen Wärmeleistung von im metallurgischen Gefäß erzeugten und über die Chargierabsaughaube und Absaugleitung abgesaugten Reaktionsgasen umfasst,

und dass die Regeleinrichtung mit einem Stellglied einer

Chargiervorrichtung zum Chargieren von Einsatzstoffen in das metallurgische Gefäß verbunden ist.

Die Temperaturmesseinrichtungen umfassen vorzugsweise Thermoelemente, da Thermoelemente eine kurze Ansprechzeit haben.

Als Durchflussmengendetektoren werden beispielsweise Anemometer, Pitotrohre, Venturidüsen, Messblenden, oder Ionendetektoren mit der Fähigkeit zur Messung von Ionengeschwindigkeit an mehreren Stellen, genutzt.

Vorzugsweise ist die Regeleinrichtung ein Zweipunktregler. Besonders bevorzugt ein Zweipunktregler, der lediglich über Software regelt. Eine Softwareregelung bietet den Vorteil kurzer Ansprechzeiten und damit die Möglichkeit einer schnellen Regelung. Zusätzlich zur Softwareregelung besteht auch die Möglichkeit über eine redundante Hardwareregelung eine Sicherheitsabschaltung zu integrieren.

Nach Ausführungsformen der erfindungsgemäßen Vorrichtung umfasst die Chargiervorrichtung eine Gießpfanne für Flüssigmetall oder eine Schrottaufgabevorrichtung.

Nach einer weiteren Ausführungsform der erfindungsgemäßen Vorrichtung ist ein Stellglied der Chargiervorrichtung der Antriebsmotor eines Hilfshubwerkes einer die Chargiervorrichtung tragenden Transporteinrichtung ist.

Anschließend wird die vorliegende Erfindung anhand beispielhafter schematischer Figuren zu Ausführungsformen erläutert.

Kurze Beschreibung der Zeichnungen

Figur 1 zeigt eine erfindungsgemäße Vorrichtung.
Figur 2 zeigt den Ablauf des erfindungsgemäßen Verfahrens an einer erfindungsgemäßen Vorrichtung.

Beschreibung der Ausführungsformen

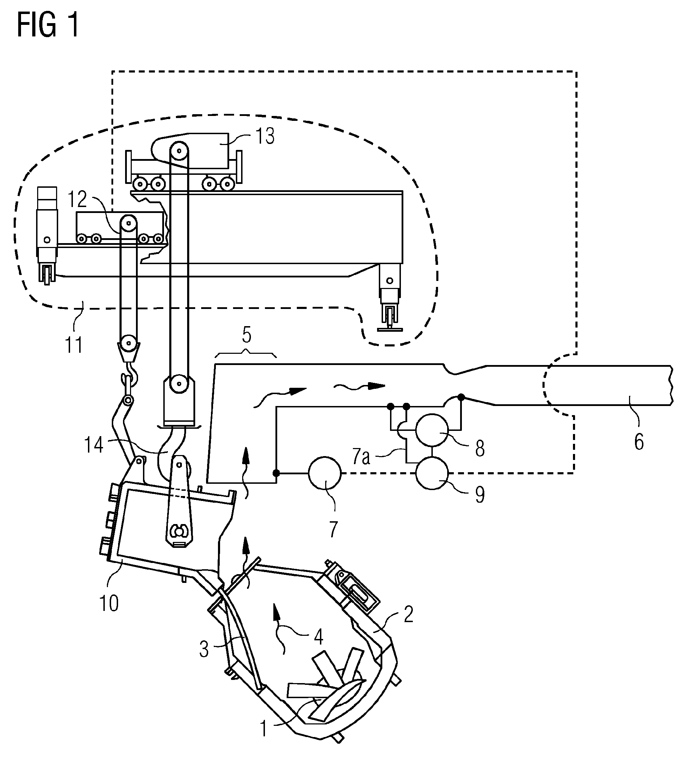

Figur 1 zeigt ein Schrott 1 enthaltendes metallurgisches Gefäß, hier ein Konverter 2. Als Einsatzstoff wird Roheisen 3 in den Konverter 2 chargiert. Beim Kontakt des Roheisens 3 mit dem Schrott 1 werden Reaktionsgase 4 erzeugt- dargestellt durch gewellte Pfeile - werden mittels einer Sekundärabsauganlage, die eine Chargierabsaughaube 5 und eine Absaugleitung 6 umfasst, abgesaugt. In der Chargierabsaughaube 5 ist eine

Temperaturmesseinrichtung zum Messen der momentanen Reaktionsgastemperatur in der Chargierabsaughaube 5 vorhanden, hier ein Thermoelement 7. In der Absaugleitung 6 ist ein Durchflussvolumendetektor 8 zur Bestimmung des momentanen Reaktionsgasdurchflusses in der Absaugleitung vorhanden. Um eine Berechnung einer Wärmeleistung des Reaktionsgases mittels der temperarturabhängigen Dichte der Reaktionsgase zu ermöglichen, ist eine Temperaturmessung mittels Thermoelement 7a unmittelbar an der Durchflussmessstelle eingesetzt. Thermoelemente 7 und 7a und Durchflussvolumendetektor 8 sind mit einer Regeleinrichtung 9 verbunden. Die Regeleinrichtung 9 errechnet aus den von den Thermoelementen 7 und 7a und dem Durchflussvolumendetektor 8 gelieferten Messwerten die momentane Wärmeleistung der Reaktionsgase. Der Wert der momentanen Wärmeleistung der erzeugten Reaktionsgase wird zur Regelung der Einsatzstoffmenge Roheisen 3 beim Chargieren von Roheisen 3 in den Konverter 2 herangezogen. Dazu ist die Regeleinrichtung 9 mit einem Stellglied einer Chargiervorrichtung zum Chargieren von Roheisen 3 verbunden. Die Chargiervorrichtung zum Chargieren von Roheisen 3 umfasst eine Gießpfanne 10 für Flüssigmetall, hier Roheisen 3. Die Chargiervorrichtung wird von einer Transportvorrichtung, umfassend einen Chargierkran 11, hier strichliert umrandet, mit Hubwerk, getragen. Das Hubwerk umfasst ein Hilfshubwerk 12 zum Kippen der Gießpfanne 10, und ein Haupthubwerk 13 mit Traghaken 14. Die Regeleinrichtung 9 ist ein Zweitpunktregler. Die Regeleinrichtung 9 ist mit dem - nicht gesondert dargestellten - Antriebsmotor des Hilfshubwerkes 12 verbunden. Die Regeleinrichtung 9 ist ein Leistungsregler und gibt automatisch Steuerbefehle an den Antriebsmotor des Hilfshubwerkes 12.

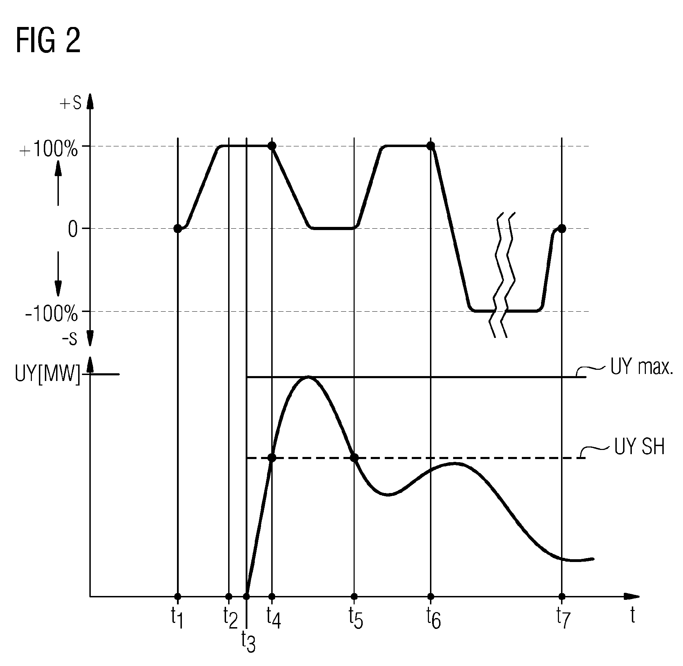

Figur 2 zeigt ein qualitatives Ablaufschema für ein erfindungsgemäßes Verfahren ausgeführt an einer Vorrichtung nach Figur 1. mit zwei gleich großen Grenzwerten einer 2-Punktregelung.

Dargestellt ist einerseits der Verlauf von UY auf der ersten Ordinate gegen die Zeit t auf der Abszisse. t steht für die Zeit. UY für die momentane Wärmeleistung des erzeugten Reaktionsgases, gemessen in [MW]. Da es sich um eine qualitative Darstellung handelt, wurde auf die Einzeichnung von Einheiten auf Abszisse und erster Ordinate verzichtet. Andererseits ist gegen dieselbe Abszisse mit einer anderen Ordinate das Ausmaß des Fortscheitens des Kippvorganges beim Kippen der Chargiervorrichtung mittels des Hilfshubwerkes, beispielsweise beim Kippen der Gießpfanne aus Figur 1, dargestellt. Diese Ordinate zeigt mit einem positiven Wert s die Geschwindigkeit, mit der das hintere Ende der in Figur 1 gezeigten Gießpfanne hochgehoben wird, genannt Hubgeschwindigkeit. Mit einem negativen Wert s zeigt sie die Geschwindigkeit, mit der das hintere Ende der in Figur 1 dargestellten Gießpfanne gesenkt wird, genannt Senkgeschwindigkeit. Das Maximum der Hubgeschwindigkeit beziehungsweise der Senkgeschwindigkeit ist mit einer Graduierung 100% versehen. Der Wert 0 für s bedeutet, dass die Gießpfanne in ihrer Position verharrt und ihr hinteres Ende weder hochgehoben noch gesenkt wird.

Dabei wird ausgegangen von einer Position der Gießpfanne zu Beginn des Kippvorganges; ein Kippen der Gießpfanne wird mit zunehmendem Wert dargestellt, ein Aufrichten der Gießpfanne wird mit abnehmendem Wert s dargestellt.

Dargestellt ist, dass eine Gießpfanne zum Zeitpunkt t1 in einer Position zu Beginn des Kippvorganges vorliegt. Ausgehend von dieser Position wird mit fortschreitender Zeit gekippt, indem das hintere Ende der Gießpfanne angehoben wird. Zum Zeitpunkt t2 ist die maximale Hubgeschwindigkeit des Hilfshubwerkes erreicht und Roheisen beginnt zu fließen. Zum Zeitpunkt t3 beginnt es, dass Wärmeleistung aus erzeugtem Reaktionsgas frei wird. Zum Zeitpunkt t4 erreicht die momentane Wärmeleistung des erzeugten Reaktionsgases einen vorbestimmten Grenzwert UY SH (Sicherheitsschaltpunkt). Ab diesem Zeitpunkt ist die momentane Wärmeleistung des erzeugten Reaktionsgases (= Messgröße des Zweipunktreglers) größer oder gleich dem vorbestimmten Grenzwert UY SH und die Hubgeschwindigkeit der Gießpfanne wird vermindert, bis sie Null erreicht. Die momentane Wärmeleistung aus erzeugtem Reaktionsgas nimmt aufgrund des Nachlaufens von Roheisen aus der Gießpfanne in den Konverter noch eine Zeit lang weiter zu, obwohl die Hubgeschwindigkeit sinkt. UY max entspricht dem Wert der MWLS. Der Grenzwert UY SH ist in dem dargestellten Beispiel so gewählt, dass die maximale Wärmeleistung MWLS = UY max nicht überschritten wird. Bei Überschreitung könnte es dazu kommen, dass in der Absaugleitung explosionsgefährliches Gas geführt wird. Da zwischen dem Zeitpunkt t4 und dem Zeitpunkt t5 aufgrund der sinkenden beziehungsweise der nicht vorhandenen Hubgeschwindigkeit die Gießpfanne immer weniger flüssiges Roheisen aus der Gießpfanne in den Konverter fließt, nimmt die momentane Wärmeleistung aus erzeugtem Reaktionsgas nach einem Maximum wieder ab. Zum Zeitpunkt t5 erreicht die abnehmende momentane Wärmeleistung des erzeugten Reaktionsgases wieder den vorbestimmten Grenzwert UY SH Ab diesem Zeitpunkt ist die momentane Wärmeleistung des erzeugten Reaktionsgases wieder kleiner oder gleich dem vorbestimmten Grenzwert UY SH und das hintere Ende der Gießpfanne wird wieder angehoben. Aufgrund des infolgedessen wieder zunehmenden Eintrages von Roheisen in die Gießpfanne wird wieder mehr Reaktionsgas durch Reaktion von Schrott und Roheisen erzeugt und nimmt entsprechend die momentane Wärmeleistung des erzeugten Reaktionsgases nach Durchlaufen eines Minimums wieder zu. Je nach Energiegehalt im Schrott kann sich dieser Vorgang noch ein- oder mehrmals wiederholen, was in Figur 2 jedoch nicht dargestellt ist.

Zum Zeitpunkt t6 ist die Hubgeschwindigkeit maximal, die Gießpfanne maximal gekippt, und die Gießpfanne wird leer. Daher wird zuerst die Hubgeschwindigkeit erst bis auf 0 reduziert und dann, bis zum Zeitpunkt t7, das hintere Ende der Gießpfanne gesenkt, das heißt also die Gießpfanne aufgerichtet, wonach der Chargierkran die Chargierposition verlässt. Danach wird der Konverter ausgerichtet und wechselt in die Blaseposition.

Die momentane Wärmeleistung des erzeugten Reaktionsgases nimmt nach Durchlaufen eines lokalen Maximums zwischen den Zeitpunkten t6 und t7 wieder ab, da ja nach völliger Entleerung der kein Nachschub an Roheisen mehr aus der leeren Gießpfanne geliefert wird.

Obwohl die Erfindung im Detail durch das bevorzugte Ausführungsbeispiele näher illustriert und beschrieben wurde, so ist die Erfindung nicht

durch die offenbarten Beispiele eingeschränkt und andere Variationen können vom Fachmann hieraus abgeleitet werden, ohne den Schutzumfang der Erfindung zu verlassen.

Bezugszeichenliste

| 1 | Schrott |
| 2 | Konverter |
| 3 | Roheisen |
| 4 | Reaktionsgas |
| 5 | Chargierabsaughaube |
| 6 | Absaugleitung |
| 7, 7a | Thermoelement |
| 8 | Durchflussvolumendetektor |
| 9 | Regeleinrichtung |
| 10 | Gießpfanne |
| 11 | Chargierkran |
| 12 | Schwenkhubwerk |
| 13 | Trag-Hubwerk |
| 14 | Traghaken |

**Patentansprüche**

1. Verfahren zur Beeinflussung des Entstehens von Reaktionsgasen (4) in einem metallurgischen Gefäß zur Erzeugung von schmelzflüssigen Metallen aus Einsatzstoffen umfassend Schrott (1) und Roheisen (3), wobei die Reaktionsgase (4) in einer Chargierabsaughaube (5) gesammelt und in einer Absaugleitung (6) einer Entstaubungsanlage zugeführt werden,
   **dadurch gekennzeichnet, dass**

   - die momentane Reaktionsgastemperatur in der Chargierabsaughaube $T_H$ (5) gemessen wird,
   - der momentane Reaktionsgasdurchfluss MR in der Absaugleitung (6) gemessen wird,
   - die Temperatur der Reaktionsgases am Ort der Messung des momentanen Reaktionsgasdurchflusses zum Zeitpunkt der Messung des momentanen Reaktionsgasdurchflusses gemessen wird,
   - aus diesen Messwerten, der Umgebunstemperatur $T_u$ und der spezifischen Wärmekapazität $c_p$ der Reaktionsgase die momentane Wärmeleistung der Reaktionsgase (4) wie folgt errechnet wird:

   $$P = MR * c_p * (T_H - T_U)$$

   und
   - der Wert dieser momentanen Wärmeleistung der Reaktionsgase (4) zur Regelung der Einsatzstoffmenge beim Chargieren von Einsatzstoffen in das metallurgische Gefäß herangezogen wird, wobei $T_H$ und MR zum selben Zeitpunkt gemessen werden.

2. Verfahren nach Anspruch 1, **dadurch gekennzeichnet, dass** der Wert der errechneten momentanen Wärmeleistung mit zumindest einem vorbestimmten Grenzwert verglichen wird, und in Abhängigkeit vom Erreichen dieses Grenzwertes und/oder einer Überschreitung dieses Grenzwertes eine Unterbrechung oder Verminderung des Chargierens von Einsatzstoffen in das metallurgische Gefäß erfolgt.

3. Verfahren nach Anspruch 2, **dadurch gekennzeichnet, dass** bei Erreichen und/oder Überschreitung des Grenzwertes das Chargieren von Einsatzstoffen eingestellt und bei einer nachfolgenden Unterschreitung des Grenzwertes das Chargieren von Einsatzstoffen wieder aufgenommen wird.

4. Verfahren nach Anspruch 2 oder 3, **dadurch gekennzeichnet, dass** der Grenzwert aus dem maximalen Wärmeleistungsabzug der Sekundärabsauganlage (MWLS) der Entstaubungsanlage, der durch die Bauform und die maximal zulässigen Temperaturen der verwendeten Materialien begrenzt ist, aus einem Leistungsgradienten, und aus der tatsächlichen Emissionsleistung des metallurgischen Gefäßes bei weitgehend vollständiger Erfassung der Reaktionsgase über die Chargierabsaughaube, TELK, errechnet wird.

5. Verfahren nach einem der vorhergehenden Ansprüche, **dadurch gekennzeichnet, dass** die Regelung des Chargierens von Einsatzstoffen in das metallurgische Gefäß über eine 2-Punktregelung erfolgt.

6. Verfahren nach einem der vorhergehenden Ansprüche, **dadurch gekennzeichnet, dass** das Chargieren von Einsatzstoffen das Einbringen von schmelzflüssigem Metall, wie Roheisen, auf eine Schrottvorlage im metallurgischen Gefäß, oder das Einbringen von Schrott auf eine Vorlage von schmelzflüssigem Metall im metallurgischen Gefäß umfasst.

7. Vorrichtung zur Beeinflussung des Entstehens von Reaktionsgasen (4) nach einem der Ansprüche 1 bis 6, umfassend ein metallurgisches Gefäß und eine Sekundärabsauganlage mit mindestens einer Chargierabsaughaube (5) und einer Absaugleitung (6), **dadurch gekennzeichnet, dass**

- eine Temperaturmesseinrichtung zum Messen der momentanen Reaktionsgastemperatur in der Chargierabsaughaube (5),
- ein Durchflussmengendetektor zur Messung des momentanen Reaktionsgasdurchflusses in der Absaugleitung (6), und
- eine Temperaturmesseinrichtung zum Messen der Temperatur der Reaktionsgases am Ort der Messung des momentanen Reaktionsgasdurchflusses zum Zeitpunkt der Messung des momentanen Reaktionsgasdurchflusses,

mit einer Regeleinrichtung (9) verbunden sind, wobei die Regeleinrichtung (9) einen Rechner zur Ermittlung eines Wertes der momentanen Wärmeleistung von im metallurgischen Gefäß erzeugten und über die Chargierabsaughaube (5) und Absaugleitung (6) abgesaugten Reaktionsgasen umfasst, und dass die Regeleinrichtung (9) mit einem Stellglied einer Chargiervorrichtung zum Chargieren von Einsatzstoffen in das metallurgische Gefäß verbunden ist.

8. Vorrichtung nach Anspruch 7, **dadurch gekennzeichnet, dass** die Regeleinrichtung ein Zweipunktregler ist.

9. Vorrichtung nach Anspruch 7 oder 8, **dadurch gekennzeichnet, dass** die Chargiervorrichtung eine Gießpfanne (10) für Flüssigmetall oder eine Schrottaufgabevorrichtung umfasst.

10. Vorrichtung nach einem der Ansprüche 7 bis 9, **dadurch gekennzeichnet, dass** das Stellglied der Chargiervorrichtung der Antriebsmotor eines Schwenkhubwerkes (12) einer die Chargiervorrichtung tragenden Transporteinrichtung ist.

## Claims

1. Method of influencing the formation of reaction gases (4) in a metallurgical vessel for producing molten metals from starting materials comprising scrap (1) and pig iron (3), where the reaction gases (4) are collected in a charging extraction hood (5) and fed via an extraction conduit (6) to a dust removal plant, **characterized in that**

- the instantaneous reaction gas temperature in the charging extraction hood $T_H$ (5) is measured,
- the instantaneous reaction gas flow MR in the extraction conduit (6) is measured,
- the temperature of the reaction gas at the place of measurement of the instantaneous reaction gas flow is measured at the point in time of the measurement of the instantaneous reaction gas flow,
- the instantaneous heat power of the reaction gases (4) is calculated from these measured values, the ambient temperature $T_U$ and the specific heat capacity of $C_p$ of the reaction gases as follows:

$$P = MR \ * \ c_p \ * \ (T_H - T_U)$$

and
- the value of this instantaneous heat power of the reaction gases (4) is employed for regulating the amount of starting material during charging of starting materials into the metallurgical vessel, where $T_H$ and MR are measured at the same point in time.

2. Method according to Claim 1, **characterized in that** the value of the calculated instantaneous heat power is compared with at least one predetermined limit value and interruption or reduction of charging of starting materials into the metallurgical vessel is carried out as a function of attainment of this limit value and/or exceeding of this limit value.

3. Method according to Claim 2, **characterized in that** when the limit value is attained and/or exceeded the charging of starting materials is stopped and the charging of starting materials is resumed again when the heat power subsequently goes below the limit value.

4. Method according to Claim 2 or 3, **characterized in that** the limit value is calculated from the maximum heat power offtake of the secondary extraction plant (MWLS) of the dust removal plant, which is limited by the construction shape and the maximum permissible temperatures for the materials used, from a power gradient and from the actual emission power of the metallurgical vessel at substantially complete collection of the reaction gases via the charging extraction hood, TELK.

5. Method according to any of the preceding claims, **characterized in that** the regulation of charging of starting materials into the metallurgical vessel is carried out by means of two-point regulation.

6. Method according to any of the preceding claims, **characterized in that** the charging of starting materials comprises the introduction of molten metal such as pig iron onto initially charged scrap in the metallurgical vessel or the introduction of scrap onto initially charged molten metal in the metallurgical vessel.

7. Apparatus for influencing the formation of reaction gases (4) according to any of Claims 1 to 6, comprising a metallurgical vessel and a secondary extraction plant having at least one charging extraction hood (5) and an extraction conduit (6),
**characterized in that**

- a temperature measurement device for measuring the instantaneous reaction gas temperature in the charging extraction hood (5),
- a throughput detector for measuring the instantaneous reaction gas flow in the extraction conduit (6) and
- a temperature measurement device for measuring the temperature of the reaction gas at the place of measurement of the instantaneous reaction gas flow at the point in time of the measurement of the instantaneous reaction gas flow,

are connected to a regulating device (9),
where the regulating device (9) comprises a computer for determining a value of the instantaneous heat power of reaction gases which are produced in the metallurgical vessel and are extracted via the charging extraction hood (5) and extraction conduit (6),
and **in that** the regulating device (9) is connected to an actuator of a charging apparatus for charging starting materials into the metallurgical vessel.

8. Apparatus according to Claim 7, **characterized in that** the regulating device is a two-point regulator.

9. Apparatus according to Claim 7 or 8, **characterized in that** the charging apparatus comprises a pouring ladle (10) for liquid metal or a scrap introduction device.

**10.** Apparatus according to any of Claims 7 to 9, **characterized in that** the actuator of the charging apparatus is the drive motor of a swivelling lifting device (12) of a transport device carrying the charging apparatus.

**Revendications**

**1.** Procédé destiné à influencer la génération de gaz de réaction (4) dans un récipient métallurgique en vue de produire des métaux fondus à partir de matières de départ comprenant de la ferraille (1) et de la fonte brute (3), les gaz de réaction (4) étant collectés dans une hotte d'aspiration de chargement (5) et amenés à une installation de dépoussiérage dans un conduit d'aspiration (6), **caractérisé en ce que**

- la température instantanée des gaz de réaction dans la hotte d'aspiration de chargement (5), $T_H$, est mesurée,
- le débit instantané des gaz de réaction, MR, dans le conduit d'aspiration (6), est mesuré,
- la température des gaz de réaction est mesurée à l'emplacement de la mesure du débit instantané des gaz de réaction à l'instant de la mesure du débit instantané des gaz de réaction,
- la puissance calorifique instantanée des gaz de réaction (4) est calculée, à partir de ces valeurs de mesure, de la température ambiante $T_u$ et de la capacité thermique massique $C_p$ des gaz de réaction, de la manière suivante :

$$P = MR * C_p * (T_H - T_u)$$

et
- la valeur de cette puissance calorifique instantanée des gaz de réaction (4) est prise en compte pour la régulation de la quantité de matière de départ lors du chargement de matières de départ dans le récipient métallurgique, $T_H$ et MR étant mesurés au même instant.

**2.** Procédé selon la revendication 1, **caractérisé en ce que** la valeur de la puissance calorifique instantanée calculée est comparée à au moins une valeur limite prédéterminée et, selon que cette valeur limite est atteinte et/ou dépassée, le chargement de matières de départ dans le récipient métallurgique est interrompu ou réduit.

**3.** Procédé selon la revendication 2, **caractérisé en ce que** le chargement de matières de départ est suspendu lorsque la valeur limite est atteinte et/ou dépassée et le chargement de matières de départ reprend lors d'un passage consécutif sous la valeur limite.

**4.** Procédé selon la revendication 2 ou 3, **caractérisé en ce que** la valeur limite est calculée à partir du rendement thermique maximal de l'installation d'aspiration secondaire (MWLS) de l'installation de dépoussiérage, qui est limité par la forme de construction et les températures tolérées maximales des matériaux utilisés, à partir d'un gradient de puissance et à partir de la performance effective du récipient métallurgique, dans le cas d'une détection essentiellement complète des gaz de réaction passant par la hotte d'aspiration de chargement, TELK.

**5.** Procédé selon l'une des revendications précédentes, **caractérisé en ce que** la régulation du chargement de matières de départ dans le récipient métallurgique s'effectue par le biais d'une régulation en deux points.

**6.** Procédé selon l'une des revendications précédentes, **caractérisé en ce que** le chargement de matières de départ comprend le déversement de métal fondu, tel que de la fonte brute, sur un collecteur de ferraille dans le récipient métallurgique ou le déversement de ferraille sur un collecteur de métal fondu dans le récipient métallurgique.

**7.** Dispositif destiné à influencer la génération de gaz de réaction (4) selon une des revendications 1 à 6, comprenant un récipient métallurgique et une installation d'aspiration secondaire avec au moins une hotte d'aspiration de chargement (5) et un conduit d'aspiration (6), **caractérisé en ce que**

- un dispositif de mesure de température destiné à mesurer la température instantanée des gaz de réaction dans la hotte d'aspiration de chargement (5),
- un détecteur de débit destiné à mesurer le débit instantané des gaz de réaction dans le conduit d'aspiration (6), et
- un dispositif de mesure de température destiné à mesurer la température des gaz de réaction à l'emplacement de la mesure du débit instantané des gaz de réaction à l'instant de la mesure du débit instantané des gaz de réaction sont reliés à un dispositif de régulation (9),

le dispositif de régulation (9) comprenant un ordinateur permettant de déterminer une valeur de la puissance calorifique instantanée des gaz de réaction produits dans le récipient métallurgique et aspirés par le biais de la hotte d'aspiration de chargement (5) et du conduit d'aspiration (6),
et **en ce que** le dispositif de régulation (9) est relié à un actionneur d'un dispositif de chargement destiné à charger des matières de départ dans le récipient métallurgique.

**8.** Dispositif selon la revendication 7, **caractérisé en ce que** le dispositif de régulation est un régulateur à deux points.

**9.** Dispositif selon la revendication 7 ou 8, **caractérisé en ce que** le dispositif de chargement comprend une poche de coulée (10) pour du métal liquide ou un dispositif d'alimentation de ferraille.

**10.** Dispositif selon l'une des revendications 7 à 9, **caractérisé en ce que** l'actionneur du dispositif de chargement est le moteur de commande d'un dispositif de levage pivotant (12) d'un dispositif de transport portant le dispositif de chargement.

FIG 1

## FIG 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2657540 A

**In der Beschreibung aufgeführte Nicht-Patentliteratur**

- **C.J.L. EIS E.A.** New Techniques in Steel Meltshop Air Pollution Control. *Iron & Steel Technology,* Februar 2009, 65-76